# EUROPÄISCHE PATENTANMELDUNG

(11) **EP 4 759 580 A1**
(43) Veröffentlichungstag der Anmeldung: **17.06.2026**
(21) Anmeldenummer: 25222613.9
(22) Anmeldetag: 11.12.2025
(51) Int. Cl.: B60H 1/34

(54) **AUSSTRÖMER**

(30) Priorität: 13.12.2024 DE 102024137676
(71) Anmelder: KTX GmbH, 42653 Solingen (DE)
(72) Erfinder: Schulz, Uwe, 42389 Wuppertal (DE)
(74) Vertreter: Janke Scholl Patentanwälte PartG mbB

(57) **Zusammenfassung**

Ausströmer (2) zur Luftleitung eines Luftvolumenstroms (L) in einen Innenraum (I) eines Fahrzeugs, wobei der Ausströmer (2) aufweist: ein Gehäuse (4), einen Stellmotor (8), ein mechanisches Stellelement (16) zur Einstellung einer Richtung und/oder einer Menge des den Ausströmer (2) durchdringenden Luftvolumenstroms (L) und eine Steuerung (18), wobei die Steuerung (18) zum Steuern des Stellmotors (8) eingerichtet ist, wobei das mechanische Stellelement (16) beweglich am dem Gehäuse (4) gehalten ist, wobei der Stellmotor (8) zur motorischen Einstellung des Stellelements (16) eingerichtet ist, wobei die Steuerung (18) an dem Gehäuse (4) befestigt ist und wobei der Stellmotor (8) an dem Gehäuse (4) befestigt ist, wobei die Steuerung (18) zum Steuern von einem oder mehr Stellmotoren (8) eingerichtet ist.

## Beschreibung

Die vorliegende Erfindung betrifft einen Ausströmer zur Luftleitung eines Luftvolumenstroms in einen Innenraum eines Fahrzeugs, wobei der Ausströmer aufweist: ein Gehäuse, einen Stellmotor, ein mechanisches Stellelement zur Einstellung einer Richtung und/oder einer Menge des den Ausströmer durchdringenden Luftvolumenstroms und eine Steuerung, wobei die Steuerung zum Steuern des Stellmotors eingerichtet ist, wobei das mechanische Stellelement beweglich an dem Gehäuse gehalten ist, wobei der Stellmotor zur motorischen Einstellung des Stellelements eingerichtet ist, wobei die Steuerung an dem Gehäuse befestigt ist und wobei der Stellmotor an dem Gehäuse befestigt ist.

Ausströmer dienen in Fahrzeugen dazu, klimatisierte von der Klimaanlage in eine Fahrgastzelle zu leiten. Fahrzeuge weisen üblicherweise eine Mehrzahl derartiger Ausströmer auf, wobei eine Richtung der Luftausströmung und eine aus einem jeweiligen Ausströmer austretende Luftmenge von einem Bediener regulierbar sind.

Im einfachsten Fall weist ein solcher Ausströmer ein Drehrad zum manuellen Öffnen und Schließen einer Verschlussklappe auf, um die Luftmenge einzustellen. Weiter können z.B. horizontale und vertikale Lamellen vorgesehen sein, die wiederum manuell einstellbar sein können und mit denen die Richtung des in die Fahrgastzelle eintretenden Luftvolumenstroms eingestellt werden kann.

Ausströmer, die Stellmotoren zur motorischen Einstellung der Stellelemente aufweisen, werden auch als elektrische Ausströmer bezeichnet.

Moderne Kraftfahrzeuge bieten alternativ oder ergänzend zur klassischen Klimatisierung mit manueller Einstellung durch den Bediener zunehmend auch automatisierte und/oder zentral gesteuerte Klimasysteme. So können z.B. eine unterschiedliche Klimatisierung verschiedener Raumzonen der Fahrgastzelle und auch eine zentrale Ansteuerung aller Klimafunktionen über touch-, gesten- oder sprachbasierte Benutzerschnittstellen ermöglicht werden.

Um derartige teil- oder vollautomatische Klimafunktionen zu ermöglichen, ist es bekannt, stellmotorisch gesteuerte Ausströmer mit ansteuerbaren Klappen oder Lamellen zu verwenden. Hierzu werden je Lamelleneinheit oder zu steuernder Klappe des betreffenden Ausströmers je ein Stellmotor verwendet, der als Baugruppe zusammen mit einer jeweiligen Stellmotorsteuerung bereitgestellt wird. Jeder Stellmotor weist daher jeweils eine eigene Stellmotorsteuerung auf, die jeweils mittels einer Schnittstelle mit einem jeweiligen Bordnetz des betreffenden Kraftfahrzeugs verbindbar ist.

Ein solcher Stellmotor ist üblicherweise zusammen mit seiner Stellmotorsteuerung in einem gemeinsamen Stellmotorgehäuse eingehaust und an dem Gehäuse des Ausströmers befestigt.

Bezüglich der Gestaltung von Ausströmern besteht die Forderung, diese möglichst kompakt und kostengünstig bereitzustellen. So ist der für einen jeweiligen Ausströmer vorgesehene Bauraum in einem Fahrzeug sehr begrenzt, wobei dennoch alle Anforderungen an die voranstehend beschriebene stellmotorische Ansteuerbarkeit gegeben sein sollen - bei einem möglichst geringen Herstellungspreis.

Vor diesem Hintergrund liegt der vorliegenden Erfindung die technische Problemstellung zugrunde, einen verbesserten Ausströmer der eingangs genannten Art anzugeben, der insbesondere kompakt, stellmotorisch ansteuerbar und kostengünstig ist.

Die voranstehend beschriebene, technische Problemstellung wird mit den Merkmalen des unabhängigen Anspruchs gelöst. Weitere Ausgestaltungen der Erfindung ergeben sich aus den abhängigen Ansprüchen und der nachstehenden Beschreibung.

Erfindungsgemäß wird ein Ausströmer zur Luftleitung eines Luftvolumenstroms in einen Innenraum eines Fahrzeugs angegeben, wobei der Ausströmer aufweist: ein Gehäuse, einen Stellmotor, ein mechanisches Stellelement zur Einstellung einer Richtung und/oder einer Menge des den Ausströmer durchdringenden Luftvolumenstroms und eine Steuerung, wobei die Steuerung zum Steuern des Stellmotors eingerichtet ist, wobei das mechanische Stellelement beweglich an dem Gehäuse gehalten ist, wobei der Stellmotor zur motorischen Einstellung des Stellelements eingerichtet ist, wobei die Steuerung an dem Gehäuse befestigt ist und wobei der Stellmotor an dem Gehäuse befestigt ist. Der Ausströmer zeichnet sich dadurch aus, dass die Steuerung zum Steuern von einem Stellmotor oder von mehreren Stellmotoren eingerichtet ist.

Insbesondere kann vorgesehen sein, dass die Steuerung zum Steuern von zwei oder mehr Stellmotoren eingerichtet ist.

Der erfindungsgemäße Ausströmer ermöglicht eine modulare Erweiterung um weitere Stellmotoren, die ebenfalls mit derselben Steuerung gesteuert werden können. Im Vergleich zu vorbekannten Ausströmern, die für jeden Stellmotor jeweils eine eigene, motorspezifische Steuerung vorsehen, so dass die Anzahl der Steuerungen der Anzahl der verwendeten Stellmotoren entspricht, können daher Bauraum und Kosten eingespart werden. Denn Stellmotoren, die jeweils motorspezifische integrierte Steuerungen aufweisen, nehmen einen größeren Bauraum ein als Stellmotoren, der ohne eigene Steuerung bereitgestellt und montiert wird.

Die Steuerung des Ausströmers kann insbesondere separat und unabhängig von dem Stellmotor bereitgestellt und am Gehäuse des Ausströmers montiert worden sein.

Die Steuerung kann separat von dem Stellmotor und mit einem Abstand zu dem Stellmotor an dem Gehäuse befestigt sein.

Die Steuerung kann insbesondere ein separat und unabhängig von dem Stellmotor an dem Gehäuse des Ausströmers montierbares und austauschbares Bauteil sein. So können die Kosten für Wartung und Reparatur sowohl für den Stellmotor als auch für die Steuerung gesenkt werden.

Gemäß einer Ausgestaltung des Ausströmers ist vorgesehen, dass der Stellmotor nicht in ein Steuerungsgehäuse der Steuerung ragt und nicht an dem Steuerungsgehäuse der Steuerung befestigt ist. Es sind Stellmotoren bekannt, deren mechanische Komponenten zumindest teilweise in ein Steuerungsgehäuse einer dem Stellmotor zugeordneten Steuerung ragen oder daran befestigt sind. Eine derartige Lösung soll vorliegend insbesondere vermieden werden. So sollen der Stellmotor und die Steuerung bevorzugt keine gemeinsam montierbare Einheit darstellen - insbesondere keine gemeinsam montierbare Baugruppe darstellen.

Zusätzlich zur Steuerung des Ausströmers soll insbesondere keine weitere Steuerung vorgesehen sein. Insbesondere soll keine mit dem Stellmotor als Baugruppe integriert bereitgestellte Steuerung vorgesehen sein.

Die Steuerung kann als zentrale Steuerung des Ausströmers bezeichnet werden, die zur Steuerung mehrerer Stellmotoren oder aller Stellmotoren des Ausströmers eingerichtet sein kann.

Die Steuerung kann zwei oder mehr Anschlüsse zur kabelgebundenen Verbindung mit zwei oder mehr Stellmotoren aufweisen. Die Anschlüsse können als Teil einer lösbaren Steckverbindung ausgestaltet sein, insbesondere als Stecker oder als Buchse ausgestaltet sein.

Die Steuerung kann mit dem zugeordneten Stellmotor fest verdrahtet sein, so dass im fertig montierten Zustand eine nicht lösbare, kabelgebundene Verbindung zwischen der Steuerung und dem Stellmotor gebildet ist.

Die Steuerung kann ein Steuerungsgehäuse aufweisen, innerhalb dessen elektronische Komponenten der Steuerung eingehaust sind, wobei das Steuerungsgehäuse an dem Gehäuse des Ausströmers befestigt ist und wobei das Steuerungsgehäuse einen Abstand zu dem Stellmotor aufweist.

Der Stellmotor kann ein Stellmotorgehäuse aufweisen, innerhalb dessen mechanische Komponenten des Stellmotors eingehaust sind, wobei das Stellmotorgehäuse an dem Gehäuse des Ausströmers befestigt ist und wobei das Stellmotorgehäuse einen Abstand zu der Steuerung aufweist.

Insbesondere weisen das Stellmotorgehäuse und das Steuerungsgehäuse einen Abstand zueinander auf und sind nicht miteinander verbunden.

Dem Stellmotor kann ein Getriebe zugeordnet sein und mit diesem Stellmotor gekoppelt sein, wobei das Getriebe mit dem zu betätigenden mechanischen Stellelement gekoppelt ist. Eine Stellbewegung des Stellmotors kann daher mithilfe des Getriebes auf das mechanische Stellelement übertragen werden. Eine Stellbewegung des Stellmotors kann mithilfe des Getriebes übersetzt werden. Das Getriebe kann eine oder mehrere der nachfolgend aufgelisteten Komponenten aufweisen: Zahnrad, Kurvenscheibe, Kurbel, Hebel, Riemen, Kette, Stößel und dergleichen.

Der Stellmotor kann ein rotatorischer oder linearer Motor sein. Der Stellmotor kann ein Servomotor oder ein Schrittmotor sein. Der Stellmotor kann ein bürstenloser oder ein bürstenbehafteter Gleichstrommotor sein. Der Stellmotor kann mit einem Bordnetz eines Personenkraftwagens betreibbar sein.

Die Steuerung kann eine Schnittstelle aufweisen, die zur Kopplung mit einem Bordnetz eines Kraftfahrzeugs eingerichtet ist.

Die Steuerung kann dazu eingerichtet sein, Signale von einem berührungsempfindlichen Bedienelement des Fahrzeugs, wie einem Touchdisplay oder dergleichen, zur Ansteuerung des Stellmotors zu verarbeiten. Die Steuerung kann dazu eingerichtet sein, Signale von einer Sprach- oder Gestensteuerung des Fahrzeugs zur Ansteuerung des Stellmotors zu verarbeiten.

Der Ausströmer kann mindestens eine Blende oder dergleichen aufweisen, die einem Bediener in einem fertig am Fahrzeug montierten Zustand zugewandt ist, wobei die Blende ein berührungsempfindliches Bedienelement zur Betätigung des Stellmotors aufweist und/oder ausbildet. Das berührungsempfindliche Bedienelement kann ein kapazitives Bedienelement sein.

Das mechanische Stellelement kann manuell betätigbar sein, wobei das mechanische Stellelement mit einem mechanischen Betätigungselement gekoppelt sein kann, wie einem Drehrad, einem Hebel, einem Griff oder dergleichen.

Der Ausströmer kann zwei oder mehr Stellmotoren aufweisen, insbesondere bis zu sechs Stellmotoren aufweisen.

Der Ausströmer kann zwei oder mehr mechanische Stellelemente zur Einstellung einer Richtung und/oder einer Menge des den Ausströmer durchdringenden Luftvolumenstroms aufweisen, insbesondere bis zu sechs mechanische Stellelemente aufweisen.

Ein jeweiliger Stellmotor kann zur motorischen Einstellung mindestens eines mechanischen Stellelements eingerichtet sein oder zur motorischen Einstellung mehrerer mechanischer Stellelemente eingerichtet sein, wobei die Steuerung zum zentralen Steuern aller Stellmotoren eingerichtet sein kann.

Die Steuerung kann separat von mindestens einem der Stellmotoren und mit einem Abstand zu diesem Stellmotor an dem Gehäuse befestigt sein.

Die Steuerung kann separat von mindestens zwei der Stellmotoren und mit einem Abstand zu diesen zwei Stellmotoren an dem Gehäuse befestigt sein.

Die Steuerung kann separat von jedem der Stellmotoren und mit einem Abstand zu jedem der Stellmotoren an dem Gehäuse befestigt sein.

Es kann vorgesehen sein, dass mindestens einer der Stellmotoren keine eigene Steuerung aufweist, wobei das Steuern dieses Stellmotors ausschließlich mittels der Steuerung zum zentralen Steuern aller Stellmotoren erfolgt.

Es kann vorgesehen sein, dass mindestens zwei der Stellmotoren keine eigene Steuerung aufweisen, wobei das Steuern dieser Stellmotoren ausschließlich mittels der Steuerung zum zentralen Steuern aller Stellmotoren erfolgt.

Es kann vorgesehen sein, dass keiner der Stellmotoren eine eigene Steuerung aufweist, wobei das Steuern aller Stellmotoren ausschließlich mittels der Steuerung zum zentralen Steuern aller Stellmotoren erfolgt.

Es versteht sich, dass die Aussage, wonach das Steuern der Stellmotoren ausschließlich mittels der Steuerung zum zentralen Steuern aller Stellmotoren erfolgt, sich lediglich auf die Baugruppe des Ausströmers bezieht. Die Steuerung selbst ist im fertig an einem Fahrzeug montierten Zustand z.B. mit einem Steuergerät des Fahrzeugs verbunden und kann von diesem Steuergerät erhaltende Signale und Befehle verarbeiten und auf deren Grundlage die Stellmotoren steuern.

Gemäß einer Ausgestaltung des Ausströmers kann vorgesehen sein, dass mindestens einer der Stellmotoren nicht in das Steuerungsgehäuse der Steuerung ragt und nicht an dem Steuerungsgehäuse der Steuerung befestigt ist. Wie bereits erwähnt, bildet der jeweilige Stellmotor insbesondere keine integrierte Baugruppe mit einer motorspezifischen Steuerung zur einzelnen Steuerung dieses einen Stellmotors aus.

Gemäß einer Ausgestaltung des Ausströmers kann vorgesehen sein, dass mindestens zwei der Stellmotoren nicht in das Steuerungsgehäuse der Steuerung ragen und nicht an dem Steuerungsgehäuse der Steuerung befestigt sind.

Gemäß einer Ausgestaltung des Ausströmers kann vorgesehen sein, dass keiner der Stellmotoren in das Steuerungsgehäuse der Steuerung ragt und keiner der Stellmotoren an dem Steuerungsgehäuse einer Steuerung befestigt ist.

Mindestens eines der zwei oder mehr mechanischen Stellelemente kann ein Leitelement zur Richtungsänderung des Luftvolumenstroms in einer ersten Richtung sein, wie eine Lamelle oder dergleichen.

Mindestens eines der zwei oder mehr mechanischen Stellelemente kann ein Leitelement zur Richtungsänderung des Luftvolumenstroms in einer ersten Richtung sein, wie ein Lamellenpaket oder dergleichen.

Mindestens eines der zwei oder mehr mechanischen Stellelemente kann ein Leitelement zur Richtungsänderung des Luftvolumenstroms in einer von der ersten Richtung verschiedenen zweiten Richtung sein, wie eine Lamelle oder dergleichen.

Mindestens eines der zwei oder mehr mechanischen Stellelemente kann ein Leitelement zur Richtungsänderung des Luftvolumenstroms in einer von der ersten Richtung verschiedenen zweiten Richtung sein, wie ein Lamellenpaket oder dergleichen.

Mindestens eines der zwei oder mehr mechanischen Stellelemente kann ein Verschlusselement zum Einstellen und Sperren des Luftvolumenstroms sein, wie eine Verschlussklappe oder dergleichen. Die Verschlussklappe kann einteilig oder mehrteilig ausgestaltet sein.

Die Verschlussklappe kann zwischen einer Offenstellung, in der ein gesamter dem Ausströmer zugeführter Luftvolumenstrom den Ausströmer durchdringt, und einer Schließstellung, in der kein oder im Wesentlichen kein Luftvolumenstrom den Ausströmer durchdringt, einstellbar sein.

Insbesondere können zwischen der Offenstellung und der Schließstellung eine oder mehrere Zwischenpositionen zum teilweisen Öffnen bzw. Schließen des Ausströmers einstellbar sein. Der Ausströmer kann dazu eingerichtet sein, ein stufenweises oder stufenloses Einstellen von Zwischenpositionen zu ermöglichen.

Die mechanischen Stellelemente können selbsthemmend an dem Gehäuse gelagert sein, so dass kein unerwünschtes Verstellen einer Position der mechanischen Stellelemente infolge von Erschütterung im Fahrbetrieb oder unter deren Eigengewicht erfolgt.

Es kann vorgesehen sein, dass ein jeweiliger Stellmotor ein maximales Drehmoment von 250 Millinewtonmeter aufweist.

Es kann vorgesehen sein, dass ein jeweiliger Stellmotor ein Gewicht von kleiner oder gleich 50 Gramm aufweist.

Es kann vorgesehen sein, dass ein jeweiliger Stellmotor eine maximale Drehzahl von 15 Umdrehungen pro Minute aufweist.

Es kann vorgesehen sein, dass ein jeweiliger Stellmotor eine Länge von kleiner oder gleich 70 mm aufweist.

Es kann vorgesehen sein, dass ein jeweiliger Stellmotor eine Breite von kleiner oder gleich 50 mm aufweist.

Es kann vorgesehen sein, dass ein jeweiliger Stellmotor eine Höhe von kleiner oder gleich 16 mm aufweist.

Ein jeweiliger Stellmotor kann daher kompakt und kostengünstig für den vorliegenden Anwendungsfalls angepasst bereitgestellt werden.

Nachfolgend wird die Erfindung anhand einer Ausführungsbeispiele darstellenden Zeichnung näher erläutert. Es zeigen jeweils schematisch:
- Fig. 1A: einen ersten erfindungsgemäßen Ausströmer in einer Frontansicht;
- Fig. 1B: den Ausströmer aus Fig. 1A in einer Draufsicht;
- Fig. 1C: den Ausströmer aus Fig. 1A in einer Seitenansicht;
- Fig. 2A: einen zweitem erfindungsgemäßen Ausströmer in einer Frontansicht;
- Fig. 2B: den Ausströmer aus Fig. 2A in einer Draufsicht;
- Fig. 2C: den Ausströmer aus Fig. 2A in einer Seitenansicht;
- Fig. 3A: einen dritten erfindungsgemäßen Ausströmer in einer Frontansicht;
- Fig. 3B: den Ausströmer aus Fig. 3A in einer Draufsicht;
- Fig. 3C: den Ausströmer aus Fig. 3A in einer Seitenansicht.

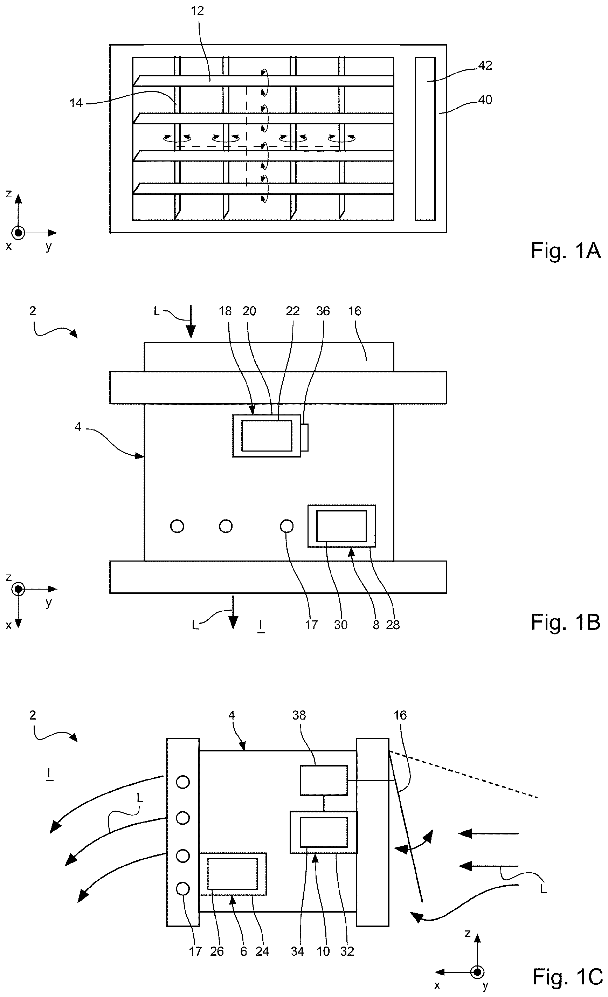

Fig. 1A zeigt einen Ausströmer 2 zur Luftleitung eines Luftvolumenstroms L in einen Innenraum I eines Fahrzeugs. Der Ausströmer 2 hat ein Gehäuse 4. Der Luftvolumenstrom L wird z.B. mittels einer Klimaanlage des Fahrzeugs erzeugt (nicht dargestellt).

Der Ausströmer 2 hat im vorliegenden Beispiel drei Stellmotoren 6, 8, 10.

Der Ausströmer 2 hat mechanische Stellelemente 12 in Form von horizontalen Lamellen 12, die zur Einstellung einer Richtung des den Ausströmer 2 durchdringenden Luftvolumenstroms L vorgesehen sind. D. h. die horizontalen Lamellen 12 dienen dazu, einzustellen, welche Strömungsrichtung dem Luftvolumenstrom L aufgeprägt wird, wenn dieser Luftvolumenstrom L den Ausströmer 2 verlässt und dem Innenraum I des Fahrzeugs zugeführt wird.

Weiter hat der Ausströmer 2 mechanische Stellelemente 14 in Form von vertikalen Lamellen 14 die dem Luftvolumenstrom L eine Richtung beim Ausströmen in den Innenraum I des Fahrzeugs aufprägen.

Die horizontalen Lamellen 12 bilden damit Leitelemente 12 zur Richtungsänderung des Luftvolumenstroms in einer ersten Richtung aus, während die vertikalen Lamellen 14 Leitelemente 14 zur Richtungsänderung des Luftvolumenstroms in einer von der ersten Richtung verschiedenen zweiten Richtung ausbilden.

Der Ausströmer 2 hat ein weiteres mechanisches Stellelement 16 in Form einer Klappe 16, die zum Einstellen einer Menge des den Ausströmer 2 durchdringenden Luftvolumenstroms L eingerichtet ist.

Die Klappe 16 kann den Ausströmer 2 vollständig sperren, sodass keinerlei Luft aus dem Ausströmer 2 in den Innenraum I des Fahrzeugs dringt. Die Klappe 16 kann gleichermaßen vollständig geöffnet werden, sodass der gesamte dem Ausströmer 2 zugeführte Luftvolumenstrom L den Ausströmer 2 durchdringt. Weiter können Zwischenpositionen eingestellt werden, sodass eine Teilmenge des maximal möglichen Luftvolumenstroms den Ausströmer 2 durchdringt. Dies ist schematisch in Fig. 1C gezeigt.

Die mechanischen Stellelemente 12, 14, 16 sind jeweils beweglich an dem Gehäuse 4 befestigt. Fig. 1B und 1C zeigen exemplarisch und schematisch am Gehäuse 4 ausgebildete Lagerstellen 17 zum Aufnehmen der vertikalen und horizontalen Lamellen 12, 14.

Der Ausströmer 2 hat eine Steuerung 18. Die Steuerung 18 ist zum Steuern der Stellmotoren 6, 8, 10 eingerichtet. Die Steuerung 18 ist an dem Gehäuse 4 befestigt. Die Stellmotoren 6, 8, 10 sind an dem Gehäuse 4 befestigt.

Der Stellmotor 6 ist zur motorischen Einstellung der horizontalen Lamellen 12 eingerichtet. Die horizontalen Lamellen 12 sind mechanisch miteinander gekoppelt, sodass eine Stellbewegung des Stellmotors 6 gleichermaßen synchron auf alle horizontalen Lamellen 12 übertragen wird. Die horizontalen Lamellen 12 bilden ein Lamellenpaket aus.

Das Einstellen einer jeweiligen Position einer jeweiligen horizontalen Lamelle 12 entspricht dem Verändern einer Orientierung einer jeweiligen Lamelle 12 um eine jeweilige Rotationsachse, die parallel zur in Fig. 1A gezeigten y-Achse orientiert ist. Die jeweiligen horizontalen Lamellen 12 werden daher mittels des zugeordneten Stellmotors 6 um ihre jeweilige Längsachse rotiert, um die gewünschte Orientierung der horizontalen Lamellen 12 einzustellen und den Luftvolumenstrom mithilfe der Lamellen 12 zu leiten.

Der Stellmotor 8 ist den vertikalen Lamellen 14 zugeordnet und zur motorischen Einstellung der vertikalen Lamellen 14 eingerichtet. Die vertikalen Lamellen 14 sind mechanisch miteinander gekoppelt, sodass eine Stellbewegung des Stellmotors 8 gleichermaßen synchron auf alle vertikale Lamellen 14 übertragen wird. Die vertikalen Lamellen 14 bilden ein weiteres Lamellenpaket aus.

Wie zuvor bereits für die horizontalen Lamellen 12 beschrieben, so gilt auch für die vertikalen Lamellen 14, dass der zugeordnete Stellmotor 8 eine rotatorische Orientierung der vertikalen Lamellen 14 um ihre jeweilige Längsachse einstellt, um dem Luftvolumenstrom L eine entsprechende Richtung aufzuprägen.

Der Stellmotor 10 ist der Klappe 16 zugeordnet und zum Einstellen einer Schwenkposition der Klappe 16 eingerichtet, wobei mithilfe der Schwenkposition der Klappe 16 die den Ausströmer 2 durchdringende Menge des Luftvolumenstroms L eingestellt wird.

Die Steuerung 18 ist separat und mit einem Abstand zu jedem der Stellmotoren 6, 8, 10 angeordnet.

Keiner der Stellmotoren 6, 8, 10 ragt in ein Steuerungsgehäuse 20 der Steuerung 18 oder ist an dem Steuerungsgehäuse 20 der Steuerung 18 befestigt.

Zusätzlich zur Steuerung 18 ist keine weitere Steuerung vorgesehen. Keiner der Stellmotoren 6, 8, 10 weist eine als Baugruppe integriert bereitgestellte Steuerung auf, sodass keiner der Stellmotoren 6, 8, 10 eine integrierte, motoreigene bzw. motorindividuelle Steuerung aufweist. Alle Stellmotoren 6, 8, 10 werden daher ausschließlich mittels der zu diesen Stellmotoren 6, 8, 10 externen, separaten Steuerung 18 angesteuert, die eine zentrale Steuerung 18 für alle Stellmotoren 6, 8, 10 ausbildet.

Innerhalb des Steuerungsgehäuses 20 der Steuerung sind elektronische Komponenten 22 der Steuerung 18 eingehaust. Dieses Steuerungsgehäuse 20 ist an dem Gehäuse 4 des Ausströmers 2 befestigt und weist einen Abstand zu allen Stellmotoren 6, 8, 10 auf.

Der Stellmotor 6 weist ein Stellmotorgehäuse 24 auf, innerhalb dessen mechanische Komponenten 26 des Stellmotors 6 eingehaust sind.

Der Stellmotor 8 weist ein Stellmotorgehäuse 28 auf, innerhalb dessen mechanische Komponenten 30 des Stellmotors 8 eingehaust sind.

Der Stellmotor 10 weist ein Stellmotorgehäuse 32 auf, innerhalb dessen mechanische Komponenten 34 des Stellmotors 10 eingehaust sind.

Jedes der Stellmotorgehäuse 24, 28, 32 ist jeweils an dem Gehäuse 4 des Ausströmers 2 befestigt. Jedes der Stellmotorgehäuse 24, 28, 32 weist jeweils einen Abstand zu dem Steuerungsgehäuse 20 der Steuerung 18 auf.

Jeder der Stellmotoren 6, 8, 10 ist vorliegend jeweils ein rotatorischer Motor.

Die Steuerung 18 weist eine Schnittstelle 36 auf, die zur Kopplung mit einem Bordnetz eines Kraftfahrzeugs eingerichtet ist. Mittels dieser Schnittstelle 36 kann die Steuerung 18 Befehle zur Ansteuerung der Stellmotoren 6, 8, 10 empfangen.

Dem Stellmotor 10 ist ein Getriebe 38 zugeordnet und wobei das Getriebe 38 mit diesem Stellmotor 10 gekoppelt ist und wobei das Getriebe 38 mit dem zu betätigenden mechanischen Stellelement 16, d.h. der Klappe 16, gekoppelt ist.

Das Getriebe 38 dient zur Übersetzung und Übertragung der von dem Stellmotor 10 ausgeführten Stellbewegung auf die Klappe 16. Das Getriebe 38 kann beispielsweise Zahnräder, Hebel, Gelenke oder dergleichen aufweisen, um die Stellbewegung des Stellmotors 10 in die gewünschte Schwenkbewegung der Klappe 16 umzusetzen. Gemäß alternativer Ausgestaltungen kann auch den Stellmotoren 6, 8 jeweils ein solches Getriebe zugeordnet sein.

Der Ausströmer 2 weist eine Blende 40 auf, die einem Bediener in einem fertig am Fahrzeug montierten Zustand zugewandt ist, wobei die Blende 40 ein berührungsempfindliches Bedienelement 42 zur Betätigung des Stellmotors 10 aufweist. Demnach kann die Luftmenge mittels Touchbedienung am Bedienelement 42 eingestellt werden.

Gemäß alternativer Ausführungsbeispiele können weitere berührungsempfindliche Bedienelemente zur Betätigung der Stellmotoren 6, 8 vorgesehen sein.

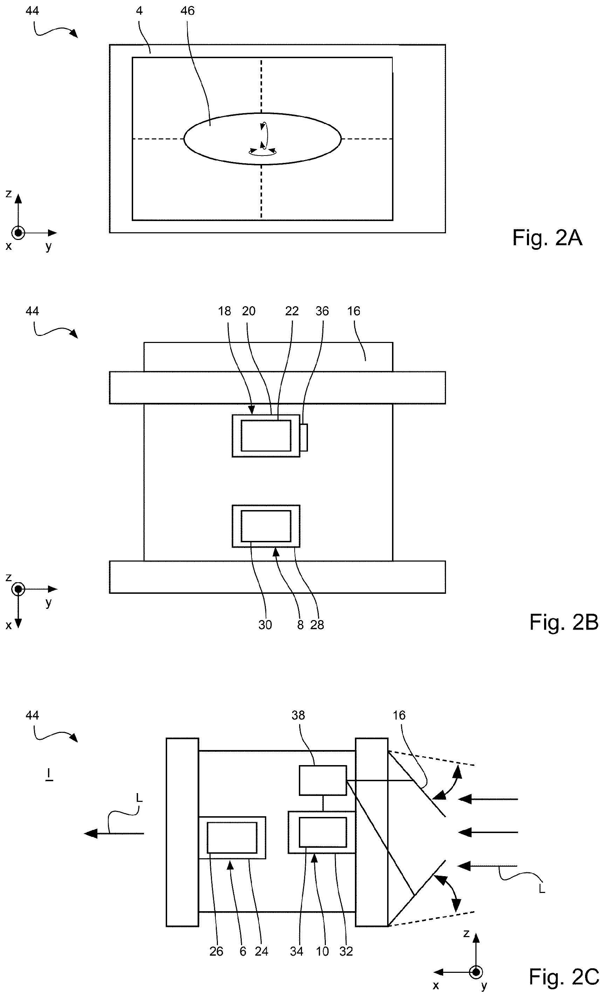

Die Fig. 2A bis 2C zeigen eine weitere Ausgestaltung eines erfindungsgemäßen Ausströmers 44, wobei zur Vermeidung von Wiederholungen lediglich auf die Unterschiede zu dem voranstehend beschriebenen Ausführungsbeispiel eingegangen wird und gleichen Merkmalen gleiche Bezugszeichen zugeordnet werden.

Statt horizontaler und vertikaler Lamellen weist der Ausströmer 44 ein zentrales mechanisches Stellelement 46 auf, dass mittels der Stellmotoren 6, 8 in horizontaler und vertikaler Richtung schwenkbar ist, um eine Ausströmrichtung des Luftvolumenstroms L einzustellen. Die Klappe 16 ist zweiteilig ausgeführt.

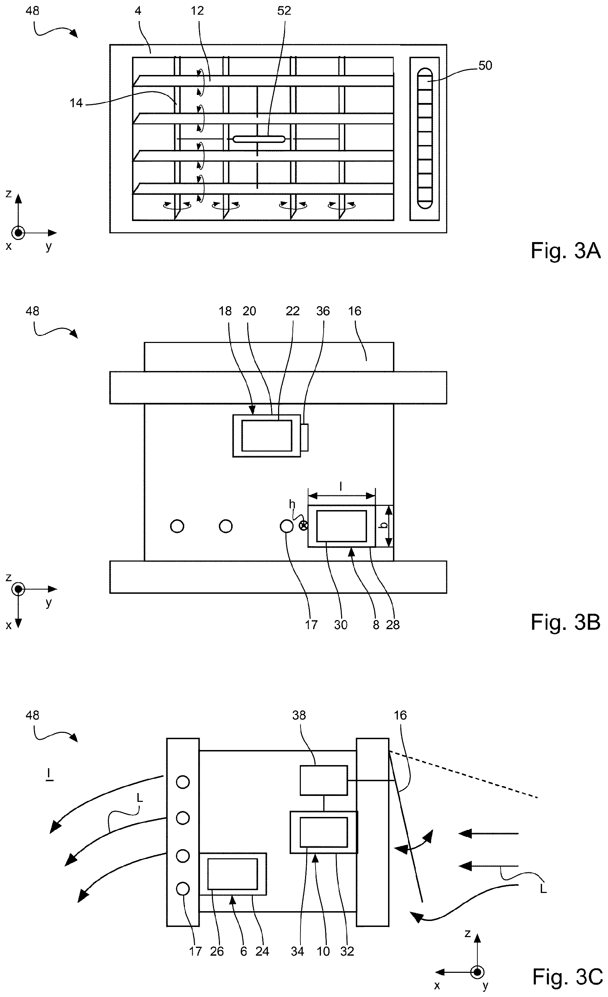

Die Fig. 3A bis 3C zeigen eine weitere Ausgestaltung eines erfindungsgemäßen Ausströmers 48, wobei zur Vermeidung von Wiederholungen lediglich auf die Unterschiede zu dem voranstehend beschriebenen Ausführungsbeispiel eingegangen wird und gleichen Merkmalen gleiche Bezugszeichen zugeordnet werden.

Der Ausströmer 48 gemäß der Fig. 3A bis 3C unterscheidet sich im Wesentlichen dadurch von den voranstehend beschriebenen Ausführungsbeispielen, dass die mechanischen Stellelemente 12, 14, 16 zusätzlich zu der stellmotorischen Betätigung auch manuell betätigbar sind.

So ist ein Drehrad 50 vorgesehen, das zum Einstellen der Schwenkposition der Klappe 16 eingerichtet ist.

Weiter ist ein Griff 52 vorgesehen, der sowohl mit den horizontalen Lamellen 12 als auch mit den vertikalen Lamellen 14 gekoppelt ist, sodass ein Bediener die Position bzw. die Orientierung der horizontalen Lamellen 12 und der vertikalen Lamellen 14 durch horizontales und/oder vertikales Verschieben des Griffs 52 einstellen kann.

Ein jeweiliger Stellmotor 6, 8, 10 weist ein maximales Drehmoment von 250 Millinewtonmeter auf. Ein jeweiliger Stellmotor 6, 8, 10 weist ein Gewicht von weniger als 50 Gramm auf. Ein jeweiliger Stellmotor 6, 8, 10 weist eine maximale Drehzahl von 15 Umdrehungen pro Minute auf.

Ein jeweiliger Stellmotor 6, 8, 10 weist eine Länge I von kleiner oder gleich 70 mm auf (vgl. Fig. 3B). Ein jeweiliger Stellmotor 6, 8, 10 weist eine Breite b von kleiner oder gleich 50 mm auf (vgl. Fig. 3B).

Ein jeweiliger Stellmotor weist 6, 8, 10 eine Höhe h von kleiner oder gleich 16 mm auf. Die Höhe h wird senkrecht zur Länge I und Breite b gemessen.

## Patentansprüche

1. Ausströmer zur Luftleitung eines Luftvolumenstroms (L) in einen Innenraum (I) eines Fahrzeugs, wobei der Ausströmer (2) aufweist:
ein Gehäuse (4),
einen Stellmotor (6, 8, 10),
ein mechanisches Stellelement (12, 14, 16) zur Einstellung einer Richtung und/oder einer Menge des den Ausströmer (2) durchdringenden Luftvolumenstroms (L) und eine Steuerung (18),
wobei die Steuerung (18) zum Steuern des Stellmotors (6, 8, 10) eingerichtet ist,
wobei das mechanische Stellelement (12, 14, 16) beweglich an dem Gehäuse (4) gehalten ist,
wobei der Stellmotor (6, 8, 10) zur motorischen Einstellung des Stellelements (12, 14, 16) eingerichtet ist,
wobei die Steuerung (18) an dem Gehäuse (4) befestigt ist und
wobei der Stellmotor (6, 8, 10) an dem Gehäuse (4) befestigt ist,
**dadurch gekennzeichnet, dass**
die Steuerung (18) zum Steuern von einem Stellmotor (6, 8, 10) oder von mehreren Stellmotoren (6, 8, 10) eingerichtet ist.

2. Ausströmer nach Anspruch 1,
**dadurch gekennzeichnet, dass**
die Steuerung (18) separat von dem Stellmotor (6, 8, 10) und mit einem Abstand zu dem Stellmotor (6, 8, 10) an dem Gehäuse (4) befestigt ist und/oder die Steuerung (18) zum Steuern von zwei oder mehr Stellmotoren (6, 8, 10) eingerichtet ist.

3. Ausströmer nach einem der voranstehenden Ansprüche,
**dadurch gekennzeichnet, dass**
der Stellmotor (6, 8, 10) nicht in ein Steuerungsgehäuse (20) der Steuerung (18) ragt und nicht an dem Steuerungsgehäuse (20) der Steuerung (18) befestigt ist und/oder
dass zusätzlich zur Steuerung (18) keine weitere Steuerung vorgesehen ist, insbesondere keine mit dem Stellmotor (6, 8, 10) als Baugruppe integriert bereitgestellte Steuerung vorgesehen ist.

4. Ausströmer nach Anspruch 3,
**dadurch gekennzeichnet, dass**
die Steuerung (18) das Steuerungsgehäuse (20) aufweist, innerhalb dessen elektronische Komponenten (22) der Steuerung (18) eingehaust sind, wobei das Steuerungsgehäuse (20) an dem Gehäuse (4) des Ausströmers (2) befestigt ist und wobei das Steuerungsgehäuse (20) einen Abstand zu dem Stellmotor (6, 8, 10) aufweist
und/oder
der Stellmotor (6, 8, 10) ein Stellmotorgehäuse (24, 28, 32) aufweist, innerhalb dessen mechanische Komponenten (26, 30, 34) des Stellmotors (6, 8, 10) eingehaust sind, wobei das Stellmotorgehäuse (24, 28, 32) an dem Gehäuse (4) des Ausströmers (2) befestigt ist und wobei das Stellmotorgehäuse (24, 28, 32) einen Abstand zu der Steuerung (18) aufweist.

5. Ausströmer nach einem der voranstehenden Ansprüche,
**dadurch gekennzeichnet, dass**
dem Stellmotor (10) ein Getriebe (38) zugeordnet und mit diesem Stellmotor (10) gekoppelt ist, wobei das Getriebe (38) mit dem zu betätigenden mechanischen Stellelement (16) gekoppelt ist
und/oder
der Stellmotor (6, 8, 10) ein rotatorischer Motor ist.

6. Ausströmer nach einem der voranstehenden Ansprüche,
**dadurch gekennzeichnet, dass**
die Steuerung (18) eine Schnittstelle (36) aufweist, die zur Kopplung mit einem Bordnetz eines Kraftfahrzeugs eingerichtet ist
und/oder
die Steuerung (18) dazu eingerichtet ist, Signale von einem berührungsempfindlichen Bedienelement des Fahrzeugs, wie einem Touchdisplay oder dergleichen, zur Ansteuerung des Stellmotors (6, 8, 10) zu verarbeiten
und/oder
der Ausströmer (2) mindestens eine Blende (40) aufweist, die einem Bediener in einem fertig am Fahrzeug montierten Zustand zugewandt ist, wobei die Blende (40) ein berührungsempfindliches Bedienelement (42) zur Betätigung des Stellmotors (6, 8, 10) aufweist
und/oder
das mechanische Stellelement (12, 14, 16) manuell betätigbar ist, wobei das mechanische Stellelement mit einem mechanischen Betätigungselement (50, 52) gekoppelt ist, wie einem Drehrad (50), einem Hebel, einem Griff (52) oder dergleichen.

7. Ausströmer nach einem der voranstehenden Ansprüche,
**dadurch gekennzeichnet, dass**
zwei oder mehr Stellmotoren (6, 8, 10) vorgesehen sind, insbesondere bis zu sechs Stellmotoren (6, 8, 10) vorgesehen sind,
zwei oder mehr mechanische Stellelemente (12, **14,** 16) zur Einstellung einer Richtung und/oder einer Menge des den Ausströmer (2) durchdringenden Luftvolumenstroms (L) vorgesehen sind, insbesondere bis zu sechs mechanische Stellelemente (12, **14,** 16) vorgesehen sind, wobei ein jeweiliger Stellmotor (6, 8, 10) zur motorischen Einstellung mindestens eines mechanischen Stellelements (12, 14, 16) eingerichtet ist oder zur motorischen Einstellung mehrerer mechanischer Stellelemente (12, 14, 16) eingerichtet ist, wobei die Steuerung (18) zum zentralen Steuern aller Stellmotoren (6, 8, 10) eingerichtet ist.

8. Ausströmer nach Anspruch 7,
**dadurch gekennzeichnet,**
**dass** die Steuerung (18) separat von mindestens einem der Stellmotoren (6, 8, 10) und mit einem Abstand zu diesem Stellmotor (6, 8, 10) an dem Gehäuse (4) befestigt ist oder, dass die Steuerung (18) separat von mindestens zwei der Stellmotoren (6, 8, 10) und mit einem Abstand zu diesen zwei Stellmotoren (6, 8, 10) an dem Gehäuse (4) befestigt ist oder, dass die Steuerung (18) separat von jedem der Stellmotoren (6, 8, 10) und mit einem Abstand zu jedem der Stellmotoren (6, 8, 10) an dem Gehäuse (4) befestigt ist.

9. Ausströmer nach einem der voranstehenden Ansprüche 6 oder 7,
**dadurch gekennzeichnet, dass**
mindestens einer der Stellmotoren (6, 8, 10) keine eigene Steuerung aufweist, wobei das Steuern dieses Stellmotors (6, 8, 10) ausschließlich mittels der Steuerung (18) zum zentralen Steuern aller Stellmotoren (6, 8, 10) erfolgt
oder
mindestens zwei der Stellmotoren (6, 8, 10) keine eigene Steuerung aufweisen, wobei das Steuern dieser Stellmotoren (6, 8, 10) ausschließlich mittels der Steuerung (18) zum zentralen Steuern aller Stellmotoren (6, 8, 10) erfolgt
oder
keiner der Stellmotoren (6, 8, 10) eine eigene Steuerung aufweist, wobei das Steuern aller Stellmotoren ausschließlich mittels der Steuerung (18) zum zentralen Steuern aller Stellmotoren (6, 8, 10) erfolgt.

10. Ausströmer nach einem der voranstehenden Ansprüche 7 bis 9,
**dadurch gekennzeichnet, dass**
mindestens einer der Stellmotoren (6, 8, 10) nicht in ein Steuerungsgehäuse (20) der Steuerung (18) ragt und nicht dem Steuerungsgehäuse (20) der Steuerung (18) befestigt ist
oder
mindestens zwei der Stellmotoren (6, 8, 10) nicht in das Steuerungsgehäuse (20) der Steuerung (18) ragen und nicht dem Steuerungsgehäuse (20) der Steuerung (18) befestigt sind
oder
keiner der Stellmotoren (6, 8, 10) das Steuerungsgehäuse (20) der Steuerung (18) ragt und keiner der Stellmotoren (6, 8, 10) an dem Steuerungsgehäuse (20) der Steuerung (18) befestigt ist.

11. Ausströmer nach einem der voranstehenden Ansprüche 7 bis 10,
**dadurch gekennzeichnet, dass**
mindestens eines der zwei oder mehr mechanischen Stellelemente (12, 14, 16) ein Leitelement (12, 14) zur Richtungsänderung des Luftvolumenstroms (L) in einer ersten Richtung ist, wie eine Lamelle (12, 14) oder dergleichen,
mindestens eines der zwei oder mehr mechanischen Stellelemente (12, 14, 16) ein Leitelement (12, 14) zur Richtungsänderung des Luftvolumenstroms (L) in einer von der ersten Richtung verschiedenen zweiten Richtung ist, wie eine Lamelle (12, 14) oder dergleichen, und
mindestens eines der zwei oder mehr mechanischen Stellelemente (12, 14, 16) ein Verschlusselement (16) zum Einstellen und Sperren des Luftvolumenstroms (L) ist, wie eine Verschlussklappe (16) oder dergleichen.

12. Ausströmer nach einem der voranstehenden Ansprüche,
**dadurch gekennzeichnet, dass**
ein jeweiliger Stellmotor (6, 8, 10) ein maximales Drehmoment von 250 Millinewtonmeter aufweist
und/oder
ein jeweiliger Stellmotor (6, 8, 10) ein Gewicht von kleiner oder gleich 50 Gramm aufweist
und/oder
ein jeweiliger Stellmotor (6, 8, 10) eine maximale Drehzahl von 15 Umdrehungen pro Minute aufweist

13. Ausströmer nach einem der voranstehenden Ansprüche,
**dadurch gekennzeichnet, dass**
ein jeweiliger Stellmotor (6, 8, 10) eine Länge (I) von kleiner oder gleich 70 mm aufweist
und/oder
ein jeweiliger Stellmotor (6, 8, 10) eine Breite (b) von kleiner oder gleich 50 mm aufweist
und/oder
ein jeweiliger Stellmotor (6, 8, 10) eine Höhe (h) von kleiner oder gleich 16 mm aufweist.
